# FASCICULE DE BREVET EUROPEEN

(11) **EP 0 665 420 B1**
(45) Date de publication et mention de la délivrance du brevet: **03.06.1998**
(21) Numéro de dépôt: 95490003.1
(22) Date de dépôt: 23.01.1995
(51) Int. Cl.: G01F 13/00

(54) **Dispositif de dosage du type dit à vis d'archimède pour le dosage de particules sensiblement sphériques**
Schneckendosierer für kugelförmige Teilchen
Screw type dosing device for dosing spherical particulate material

(30) Priorité: 26.01.1994 FR 9401048
(43) Date de publication de la demande: 02.08.1995
(73) Titulaire: PROSIGN S.A., 92250 La Garenne Colombes (FR)
(72) Inventeur: Delaney, Arnold Thomas, F-78450 Chaveney (FR)
(74) Mandataire: Lemoine, Robert

(56) Documents cités:
- WO-A-91/17940
- DE-B- 1 080 486
- DE-B- 1 137 870
- DE-B- 1 172 055
- DE-U- 8 914 389

## Description

L'invention se rapporte à un dispositif de dosage du type dit à vis d'archimède, pour le dosage de particules sensiblement sphériques de matériau abrasif d'un diamètre déterminé, telles des microbilles de verre du genre de celles utilisées en marquage routier.

En effet, pour améliorer la visibilité des marquages routiers, il est classique de répandre, sur la peinture des signes et/ou des lignes de marquage, des microbilles en verre qui augmentent le pouvoir de réflexion de ces marquages.

On connaît les dispositifs de dosage à vis dans d'autres domaines mais, jusqu'alors, ces dispositifs ne pouvaient être utilisés dans le domaine de l'invention en raison du caractère hautement abrasif du matériau à doser, lequel engendrait une usure fulgurante du dispositif et/ou son obstruction et son bris inéluctable.

En effet, les dispositifs classiques comprennent principalement :
- une vis d'enveloppe sensiblement cylindrique de révolution avec au moins un filet hélicoïdal déterminant une rainure large et profonde eu égard au diamètre de tête de la dite vis,
- un corps comprenant au moins une chambre qui dite de dosage, cylindrique et logeant axialement la vis, comporte une ouverture d'entrée du matériau qui est disposée tangentiellement à la dite vis et une ouverture d'éjection du matériau qui est située approximativement axialement à la dite vis à l'une de ses extrémités,
- un moyen de guidage en rotation de la vis dans le corps et ce, autour de son axe longitudinal et,
- un moyen moteur rotatif notamment d'application à la vis d'un nombre de tours déterminés autour de son axe longitudinal.

Un résultat que l'invention vise à obtenir est un dispositif qui, sans être onéreux, remédie à l'ensemble des inconvénients précités.

A cet effet, l'invention a pour objet un dispositif du type précité notamment caractérisé en ce que :
- au niveau de celle des extrémités de la vis qui est située près de l'ouverture d'éjection de la chambre, la dite chambre présente en regard de la face cylindrique d'enveloppe de la vis, une face cylindrique qui, d'une part est écartée de la dite face de la vis d'un jeu inférieur au diamètre des particules et, d'autre part, à une dimension longitudinale au moins suffisante pour enserrer au moins un filet de vis sur 360°, et
- dans son autre partie, la chambre présente une face cylindrique qui est écartée de la face cylindrique d'enveloppe de la vis d'un jeu supérieur au diamètre des particules.

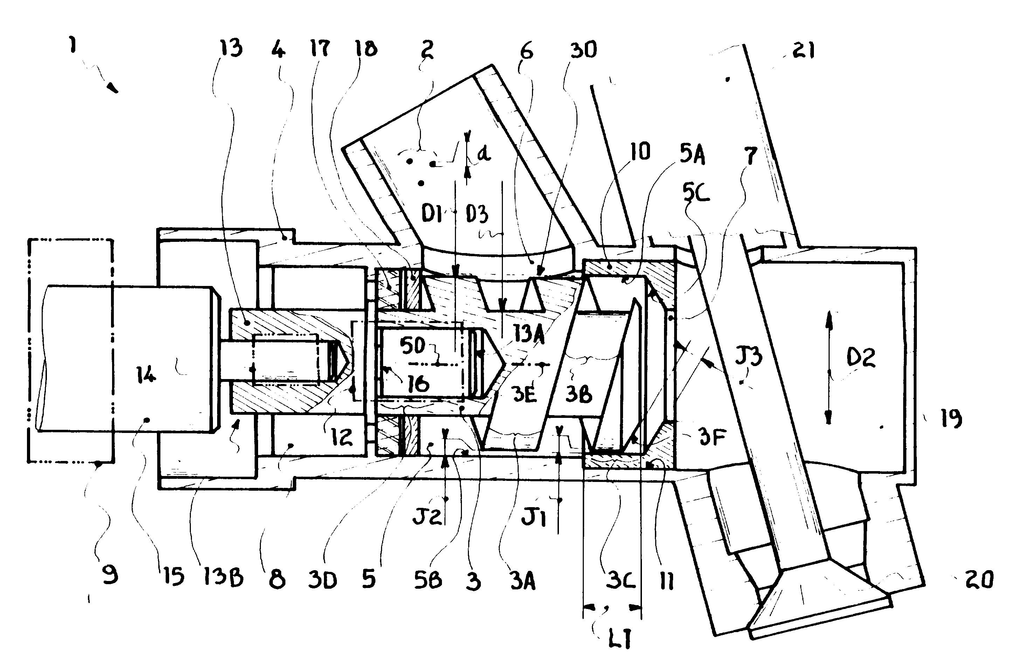

L'invention sera bien comprise à l'aide de la description ci-aprés en regard du dessin ci-annexé qui représente schématiquement une vue en coupe longitudinale du dispositif de l'invention.

En se reportant au dessin, on voit un dispositif 1 de dosage de particules 2 de matériau abrasif, telles des microbilles de verre de diamètre d déterminé.

Ce dispositif comprend principalement :
- une vis 3 d'enveloppe 30 sensiblement cylindrique de révolution avec au moins un filet hélicoïdal 3A déterminant une rainure 3B large et profonde eu égard au diamètre D1 de tête de la dite vis,
- un corps 4 comprenant au moins une chambre 5 qui dite de dosage, cylindrique et logeant axialement la vis 3, comporte une ouverture 6 d'entrée du matériau qui est disposée tangentiellement à la dite vis et une ouverture 7 d'éjection du matériau qui est située approximativement axialement à la dite vis à l'une 3C de ses extrémités 3C, 3D,
- un moyen 8 de guidage en rotation de la vis 3 dans le corps 4 et ce, autour de son axe longitudinal 3E et,
- un moyen 9 moteur rotatif notamment d'application à la vis 3 d'un nombre de tours déterminés autour de son axe 3E longitudinal.

De manière remarquable :
- au niveau de celle 3C des extrémités 3C, 3D de la vis 3 qui est située près de l'ouverture 7 d'éjection de la chambre 5, la dite chambre 5 présente en regard de la face cylindrique 30 d'enveloppe de la vis 3, une face 5A cylindrique qui, d'une part est écartée de la dite face 30 de la vis d'un jeu J1 inférieur au diamètre d des particules et, d'autre part, à une dimension longitudinale L1 au moins suffisante pour enserrer au moins un filet 3A de vis sur 360°, et
- dans son autre partie, la chambre 5 présente une face cylindrique 5B qui est écartée de la face cylindrique 30 d'enveloppe de la vis d'un jeu J2 supérieur au diamètre d des particules 2.

Ces particularités permettent d'assurer une longévité accrue du dispositif en préservant sa précision.

De manière préférentielle, dans sa partie coopérant pratiquement sans jeu avec l'une 3C des extrémités 3C, 3D de la vis 3, le corps 4 comprend une pièce rapportée 10 dite pièce d'usure.

De préférence, la pièce d'usure 10 est de forme d'enveloppe approximativement cylindrique de révolution et est rapportée dans un alésage 11 sensiblement cylindrique du corps 4.

Par cela, l'entretien du dispositif 1 peut être limité au remplacement d'une fraction 10 réduite du corps 4.

De manière notable :
- d'une part, l'extrémité 3C de la vis 3 située au niveau de l'ouverture 7 d'éjection présente localement une face 3F de forme d'enveloppe sensiblement tronconique et il en est localement de même pour une face 5C de la chambre 5 de dosage qui est située en vis à vis et à une distance déterminée J3 de cette partie extrême et,
- d'autre part, le diamètre D2 de l'ouverture d'éjection est sensiblement égale au diamètre D3 du moyen du noyau de la vis 3.

De manière notable, les faces tronconiques extrêmes 3F et 5C de la vis 3 et de la chambre ont une même conicité.

Ces particularités permettent de garantir une certaine précision au dispositif du fait du débit contrôlé que ces éléments permettent de produire notamment par l'ajustement de la valeur du jeu J3 qui sépare les faces tronconiques extrêmes 3F, 5C.

L'homme du métier est à même de déterminer la valeur du jeu J3 la plus appropriée en fonction des caractéristiques du matériau particulaire.

De manière remarquable :
- d'une part, à son extrémité 3D opposée à celle 3C située au niveau de l'ouverture 7 d'éjection, la vis 3 est, par un moyen 12 d'accouplement démontable, immobilisée en rotation et en translation sur l'une 13A des extrémités 13A, 13B d'un arbre primaire 13, quant à lui guidé en rotation et immobilisé en translation par rapport au corps 4 et selon l'axe longitudinal 5D de la chambre 5 et,
- d'autre part, cet arbre 13 porte à son extrémité 13B opposée à celle d'accouplement avec la vis 3 un moyen 14 d'accouplement démontable avec un arbre secondaire 15, quant à lui par ailleurs associé au moyen moteur 9.

De manière remarquable, le moyen 12 d'accouplement de l'arbre primaire et de la vis comprend un élément 16 dont la résistance au cisaillement est déterminée de manière telle que sa rupture intervienne pour un couple déterminé en vue de préserver le mécanisme du dispositif d'éventuelles détériorations.

De manière notable, entre la vis 3 et l'arbre primaire est interposé au moins un élément 17, 18 dit d'étanchéité.

En plus de la chambre 5 de dosage, le dispositif comprend une chambre 19 d'éjection qui, raccordée à l'ouverture 7 d'éjection de la chambre 5 de dosage comporte une ouverture contrôlée par un clapet 20 commandé par un vérin 21.

## Revendications

1. Dispositif (1) de dosage de particules (2) de matériau abrasif, telles des microbilles de verre de diamètre (d) déterminé comprenant principalement :
- une vis (3) d'enveloppe (30) sensiblement cylindrique de révolution avec au moins un filet hélicoïdal (3A) déterminant une rainure (3B) large et profonde eu égard au diamètre (D1) de tête de la dite vis,
- un corps (4) comprenant au moins une chambre (5) qui dite de dosage, cylindrique et logeant axialement la vis (3), comporte une ouverture (6) d'entrée du matériau qui est disposée tangentiellement à la dite vis (3) et une ouverture (7) d'éjection du matériau qui est située approximativement axialement à la dite vis (3) à l'une (3C) de ses extrémités (3C, 3D),
- un moyen (8) de guidage en rotation de la vis (3) dans le corps (4) et ce, autour de son axe longitudinal (3E) et,
- un moyen (9) moteur rotatif notamment d'application à la vis (3) d'un nombre de tours déterminés autour de son axe (3E) longitudinal,
ce dispositif de dosage étant **CARACTERISE** en ce que :
- au niveau de celle (3C) des extrémités (3C, 3D) de la vis (3) qui est située près de l'ouverture (7) d'éjection de la chambre (5), la dite chambre (5) présente en regard de la face cylindrique (30) d'enveloppe de la vis (3), une face (5A) cylindrique qui, d'une part est écartée de la dite face (30) de la vis d'un jeu (J1) inférieur au diamètre (d) des particules et, d'autre part, à une dimension longitudinale (L1) au moins suffisante pour enserrer au moins un filet (3A) de vis sur 360°, et
- dans son autre partie, la chambre (5) présente une face cylindrique (5B) qui est écartée de la face cylindrique (30) d'enveloppe de la vis d'un jeu (J2) supérieur au diamètre (d) des particules (2).

2. Dispositif selon la revendication 1 **caractérisé** en ce que, dans sa partie coopérant pratiquement sans jeu avec l'une (3C) des extrémités (3C, 3D) de la vis (3), le corps (4) comprend une pièce rapportée (10) dite pièce d'usure.

3. Dispositif selon la revendication 1 ou 2 **caractérisé** en ce que :
- d'une part, l'extrémité (3C) de la vis (3) située au niveau de l'ouverture (7) d'éjection présente localement une face (3F) de forme d'enveloppe sensiblement tronconique et il en est localement de même pour une face (5C) de la chambre (5) de dosage qui est située en vis à vis et à une distance déterminée (J3) de cette partie extrême et,
- d'autre part, le diamètre (D2) de l'ouverture d'éjection est sensiblement égale au diamètre (D3) du moyen du noyau de la vis (3).

4. Dispositif selon l'une quelconque des revendications 1 à 3 **caractérisé** en ce que :
- d'une part, à son extrémité (3D) opposée à celle (3C) située au niveau de l'ouverture (7) d'éjection, la vis (3) est, par un moyen (12) d'accouplement démontable, immobilisée en rotation et en translation sur l'une (13A) des extrémités (13A, 13B) de l'arbre primaire (13), quant à lui guidé en rotation et immobilisé en translation par rapport au corps (4) et selon l'axe longitudinal (5D) de la chambre (5) et,
- d'autre part, cet arbre (13) porte à son extrémité (13B) opposée à celle d'accouplement avec la vis (3) un moyen (14) d'accouplement démontable avec un arbre secondaire (15), quant à lui par ailleurs associé au moyen moteur (9).

5. Dispositif selon l'une quelconque des revendications 1 à 4 **caractérisé** en ce que le moyen (12) d'accouplement de l'arbre primaire et de la vis comprend un élément (16) dont la résistance au cisaillement est déterminée de manière telle que sa rupture intervienne pour un couple déterminé en vue de préserver le mécanisme du dispositif d'éventuelles détériorations.

6. Dispositif selon l'une quelconque des revendications 1 à 5 **caractérisé** en ce qu'entre la vis (3) et l'arbre primaire est interposé au moins un élément (17, 18) dit d'étanchéité.

7. Dispositif selon l'une quelconque des revendications 1 à 6 **caractérisé** en ce qu'en plus de la chambre (5) de dosage, il comprend une chambre (19) d'éjection qui, raccordée à l'ouverture (7) d'éjection de la chambre (5) de dosage comporte une ouverture contrôlée par un clapet (20) commandé par un vérin (21).

## Patentansprüche

1. Vorrichtung (1) zum Dosieren von Partikeln (2) eines schleifenden Materials wie Glaskügelchen mit einem bestimmten Durchmesser (d), vor allem bestehend aus :
- einer Schnecke (3) mit im wesentlichen zylinderförmigem Rotationsgehäuse (30) mit mindestens einem schraubenförmigen Gewinde (3A), das eine unter Berücksichtigung des Durchmessers (D1) des Kopfes der Schnecke breite und tiefe Nut (3B) bildet,
- einem Körper (4) mit mindestens einer sog. Dosierkammer (5), die zylinderförmig ist, die Schnecke (3) axial aufnimmt und eine tangential zur Schnecke (3) angeordnete Öffnung (6) zum Einlaufen des Materials aufweist, sowie eine Öffnung (7) zum Ausstoßen des Materials, die annähernd axial zur Schnecke (3) an einem (3C) ihrer Enden (3C, 3D) liegt,
- einem Mittel (8) zur Rotationsführung der Schnecke (3) im Körper (4), und zwar um ihre Längsachse (3E), und
- einem Drehantriebsmittel (9), insbesondere zum Anlegen einer bestimmten Drehzahl an die Schnecke (3) um ihre Längsachse (3E),
wobei die Dosiervorrichtung **dadurch gekennzeichnet** ist, daß :
- an einem (3C) der Enden (3C, 3D) der Schnecke (3), das in der Nähe der Ausstoßöffnung (7) der Kammer (5) liegt, die Kammer (5) der zylinderförmigen Gehäuseseite (30) der Schnecke (3) gegenüberstehend eine zylinderförmige Seite (5A) aufweist, die einerseits von der Seite (30) der Schnecke mit einem Spiel (J1) absteht, das kleiner als der Durchmesser (d) der Partikel ist, und andererseits eine Längsausdehnung (L1) aufweist, die mindestens ausreicht, um mindestens ein Gewinde (3A) der Schnecke auf 360° zu umschließen, und
- die Kammer (5) in ihrem anderen Teil eine zylinderförmige Seite (5B) aufweist, die von der zylinderförmigen Gehäuseseite (30) der Schnecke mit einem Spiel (J2) absteht, das größer als der Durchmesser (d) der Partikel (2) ist.

2. Vorrichtung nach Anspruch 1, **dadurch gekennzeichnet**, daß der Körper (4) in seinem mit einem (3C) der Enden (3C, 3D) der Schnecke im wesentlichen spielfrei zusammenarbeitenden Teil einen Einsatz (10), ein sog. Verschleißteil, aufweist.

3. Vorrichtung nach Anspruch 1 oder 2, **dadurch gekennzeichnet**, daß :
- einerseits das an der Ausstoßöffnung (7) liegende Ende (3C) der Schnecke (3) örtlich eine Seite (3F) mit im wesentlichen kegelstumpfartiger Gehäuseausbildung aufweist und das gleiche gilt örtlich für eine Seite (5C) der Dosierkammer (5), die diesem äußersten Teil gegenüber und in einem bestimmten Abstand (J3) von diesem liegt, und
- andererseits der Durchmesser (D2) der Ausstoßöffnung im wesentlichen gleich dem durchschnittlichen Durchmesser (D3) des Kerns der Schnecke (3) ist.

4. Vorrichtung nach irgendeinem der Ansprüche 1 bis 3, **dadurch gekennzeichnet**, daß :
- einerseits die Schnecke (3) an ihrem Ende (3D), das dem an der Ausstoßöffnung (7) befindlichen Ende (3C) abgewandt ist, von einem ausbaubaren Kupplungsmittel (12) am einem (13A) der Enden (13A, 13B) der Antriebswelle (13) drehgesichert und axial gesichert wird, welche bezüglich des Körpers (4) und auf der Längsachse (5D) der Kammer (5) drehbar geführt und axial gesichert wird, und
- andererseits diese Welle (13) an ihrem dem Ende zur Kupplung an die Schnecke (3) abgewandten Ende (13B) ein ausbaubares Kupplungmittel (14) mit einer Nebenwelle (15) aufweist, welche übrigens einem Antriebsmittel (9) zugeordnet ist.

5. Vorrichtung nach irgendeinem der Ansprüche 1 bis 4, **dadurch gekennzeichnet**, daß das Kupplungsmittel (12) der Antriebswelle und der Schnecke ein Glied (16) aufweist, dessen Scherfestigkeit so bestimmt wird, daß sein Brechen zur Sicherung des Mechanismus der Vorrichtung vor etwaigen Beschädigungen bei einem bestimmten Moment erfolgt.

6. Vorrichtung nach irgendeinem der Ansprüche 1 bis 5, **dadurch gekennzeichnet**, daß mindestens ein sog. Dichtungselement (17, 18) zwischen der Schnecke (3) und der Antriebswelle angeordnet ist.

7. Vorrichtung nach irgendeinem der Ansprüche 1 bis 6, **dadurch gekennzeichnet**, daß sie außer der Dosierkammer (5) eine Ausstoßkammer (19) umfaßt, die an die Ausstoßöffnung (7) der Dosierkammer (5) angeschlossen ist und eine Öffnung aufweist, die von einer von einem Zylinder (21) angetriebenen Klappe (20) gesteuert wird.

## Claims

1. A device (1) for dosing abrasive material particles (2), such as glass microballs of a given diameter (d), comprising mainly :
- a screw (3) with a substantially cylindrical revolution envelope (30) having at least one helical thread (3A) forming a groove (3B), which is wide and deep in relation to the head diameter (D1) of said screw,
- a body (4) comprising at least one cylindrical so-called dosing chamber (5), which houses the screw (3) axially and includes a material feed opening (6) disposed tangentially to said screw (3) and a material discharge opening (7) located approximately axially to said screw (3) at one (3C) of the ends (3C, 3D) thereof,
- means (8) for rotatably guiding the screw (3) into the body (4) about the longitudinal axis (3E) thereof, and - rotary driving means (9) particularly for imparting to the screw (3) a given number of revolutions about the longitudinal axis (3E) thereof,
said dosing device being **CHARACTERIZED** in that :
- at said one (3C) of the ends (3C, 3D) of the screw (3) which is located proximate to the discharge opening (7) of the chamber (5), said chamber (5) exhibits, opposite the cylindrical envelope face (30) of the screw (3), a cylindrical face (5A), which is spaced apart from said screw face (30) by a clearance (J1) smaller than the particle diameter (d) and which has a longitudinal dimension (L1) at least sufficient to encompass at least one screw thread (3A) over 360°, and
- in its remaining portion, the chamber (5) exhibits a cylindrical face (5B), which is spaced apart from the screw cylindrical envelope face (30) by a clearance (J2) larger than the diameter (d) of the particles (2).

2. The device according to claim 1, **characterized** in that in its portion cooperating virtually free from backlash with one (3C) of the ends (3C, 3D) of the screw (3), the body (4) comprises a so-called wear insert (10).

3. The device according to claim 1 or 2, **characterized** in that :
the end (3C) of the screw (3) which is located at the discharge opening (7) exhibits locally a face (3F) having a substantially truncated cone-shaped envelope configuration, just as it is locally with a face (5C) of the dosing chamber (5) which is located opposite and at a given distance (J3) of said end portion, and
- the diameter (D2) of the discharge opening is substantially equal to the diameter (D3) of the core of the screw (3).

4. The device according to any of claims 1 to 3, **characterized** in that :
- at its end (3D) opposed to the one (3C) located at the discharge opening (7), the screw (3) is rotationally and translationally secured by dismountable coupling means (12) to one (13A) of the ends (13A, 13B) of the primary shaft (13), which is rotatably guided and translationally secured with respect to the body (4) and along the longitudinal axis (5D) of the chamber (5), and
- at its end (13B) opposed to the end thereof coupled with the screw (3), said shaft (13) carries dismountable means (14) for coupling with a secondary shaft (15) associated with the driving means (9).

5. The device according to any of claims 1 to 4, **characterized** in that the means (12) for coupling the primary shaft and screw comprises a member (16) having a shear strength so designed as to break for a given torque in order to protect the device mechanism from possible damaging.

6. The device according to any of claims 1 to 5, **characterized** in that between the screw (3) and the primary shaft at least one so-called sealing member (17, 18) is disposed.

7. The device according to any of claims 1 to 6, **characterized** in that it comprises, in addition to the dosing chamber (5), a discharge chamber (19) connected to the discharge opening (7) of the chamber (5) and including an opening controlled by a check valve (20), which is actuated by a cylinder (21).
